# EUROPÄISCHE PATENTSCHRIFT

(11) **EP 3 018 495 B1**
(45) Veröffentlichungstag und Bekanntmachung des Hinweises auf die Patenterteilung: **14.03.2018**
(21) Anmeldenummer: 15189497.9
(22) Anmeldetag: 13.10.2015
(51) Int. Cl.: G01S 17/08, G01S 17/42, G01S 17/48, G01S 7/481

(54) **SENSOR**
SENSOR
CAPTEUR

(30) Priorität: 07.11.2014 DE 102014116254
(43) Veröffentlichungstag der Anmeldung: 11.05.2016
(73) Patentinhaber: SICK AG, 79183 Waldkirch (DE)
(72) Erfinder: Jägel, Herr Matthias, 79104 Freiburg (DE)

(56) Entgegenhaltungen:
- DE-U1-202013 009 244
- US-A- 6 133 988
- US-A1- 2008 297 803
- US-A1- 2013 075 595
- US-B1- 6 545 749

## Beschreibung

Die vorliegende Erfindung betrifft einen Sensor mit einem Sendeelement zum Aussenden von Licht, mit einem Empfangselement zum Empfangen von Licht in einem Nahbereich und einem Fernbereich und einer Empfangslinse, welche dem Empfangselement vorgeordnet ist.

Für optische Sensoren, insbesondere Distanz-Sensoren, insbesondere Triangulationssensoren gibt es die Anforderung, einen möglichst großen Messbereich abzudecken. Da von fernen Zielen physikalisch bedingt nur wenig Leistung auf eine Empfangsapertur trifft, ist diese möglichst groß zu wählen und im Rahmen der gegebenen Gehäusemaße optimal zu nutzen. Bei Zielen, die sehr nahe am Sensor liegen, ist zwar ausreichend Leistung vorhanden, diese wird jedoch nicht zwingend auf das Empfangselement abgebildet. Dazu werden nach dem Stand der Technik zusätzliche optische Elemente angeordnet, die den nutzbaren Bereich der Empfangsapertur für die FernZone einschränken.

Weiter werden nach dem Stand der Technik multifokale Empfangslinsen eingesetzt. Dabei werden eine oder mehrere zusätzliche Empfangslinsen eingesetzt, welche eine kürzere Brennweite und/oder eine andere Position besitzen.

Zusätzliche Nahzonen bzw. -linsen reduzieren den für die Fernzone nutzbaren Bereich und tragen in den meisten Fällen nicht zum Fern-Signal bei, da diese ferne Objekte nicht oder nur unscharf auf das Empfangselement abbilden.

Die DE 41 25 479 C2 offenbart einen Reflexionslichttaster mit einem am Nahempfangselement angeordneten stationären Spiegelelement.

Die EP 2 685 278 A1 offenbart einen optischen Sensor zur Ermittlung einer Distanz mit einem Spiegelelement, das im Nahbereich die Strahlen auf das Empfangselement lenkt.

Die EP 2 101 189 A1 offenbart einen optischen Sensor mit Hohlspiegel und Reflektorelement für den Nahbereich.

Die DE 102 20 037 B4 offenbart einen Triangulationssensor mit einer zusätzlichen Linse für den Nahbereich neben einer Hauptempfangslinse.

Die US 2013/0075595 A1 offenbart eine Sendelinse mit einer Zusatzlinse im Randbereich.

Die US 2008/0297803 A1 offenbart eine einstückige Linse für Sender und Empfänger für einen Berührungssensor.

Die DE 20 2013 009 244 U1 betrifft ein Leuchtmittel mit einer Linse.

Die US 6 133 988 A offenbart eine kombinierte Empfangslinse und ein Prisma.

Die US 6 545 749 B1 offenbart eine kombinierte Linse mit einem Linsenabschnitt für eine Fernzone und einem Linsenabschnitt für eine Nahzone mit jeweils unterschiedlichen optischen Linseneigenschaften.

Eine Aufgabe der Erfindung besteht darin, einen Sensor mit einer Empfangslinse bereitzustellen, wobei der Sensor auch nahe Objekte detektieren kann. Eine weitere Aufgabe besteht darin, den Empfangsbereich der Empfangslinse möglichst nicht einzuschränken.

Die Aufgabe wird gemäß Anspruch 1 gelöst durch einen Sensor mit einem Sendeelement zum Aussenden von Licht, mit einem Empfangselement zum Empfangen von Licht in einem Nahbereich und einem Fernbereich und einer Empfangslinse, welche dem Empfangselement vorgeordnet ist, wobei die Empfangslinse einen Randabschnitt aufweist, wobei der Randabschnitt das Licht aus dem Nahbereich auf das Empfangselement umlenkt, wobei der Randabschnitt eine glatte Oberfläche aufweist, wobei der Randabschnitt das Licht im Nahbereich über Totalreflexion auf das Empfangselement lenkt.

Der erfindungsgemäße Sensor dient zur Detektion von Objekten im Erfassungsbereich des Sensors bzw. in einem Überwachungsbereich. Bei einer Erfassung von einem mehr oder weniger diffus streuendem Objekt bzw. Target ändert sich ein Einfallswinkel in die Empfangsapertur bzw. Empfangslinse bei kurzen Abständen deutlich. Nach dem Auftreffen der Lichtstrahlen auf der Empfangslinsenoberfläche treffen Lichtstrahlen von einem Objekt im Nahbereich auf den Randabschnitt der Empfangslinse. Dieser Randabschnitt wird dabei nur von den Lichtstrahlen aus dem Nahbereich erreicht, nicht jedoch von den Lichtstrahlen aus dem Fernbereich.
Der Randabschnitt der Empfangslinse ist so ausgeführt, dass eine Seite der Empfangslinse abgeflacht ist, wobei die Lichtstrahlen von einem Objekt im Nahbereich nach dem Auftreffen der Lichtstrahlen auf der konvexen Empfangslinsenoberfläche auf den Randabschnitt der Empfangslinse treffen. Über diesen Randabschnitt gelangt das remittierte oder reflektierte Licht von einem im Nahbereich erfassten Objekt auf den Randabschnitt. Das empfangene Licht wird von dem Randabschnitt reflektiert oder remittiert und gelangt anschließend in das Empfangselement.

Gemäß der Erfindung werden die vom Objekt reflektierten bzw. remittierten Lichtstrahlen an dem Randabschnitt umgelenkt und gelangen nach der Umlenkung in das Empfangselement. Der Randabschnitt dient dem Licht daher als Umlenkfläche.

Dadurch ist es möglich, Objekte, die sehr nahe am Sensor sind zu erfassen, ohne dass zusätzliche Komponenten im Sensor notwendig sind.

Das empfangene Licht wird beispielsweise von einer Auswerteeinheit ausgewertet und es wird abhängig vom empfangenen Licht ein Objektfeststellungssignal generiert.

Gemäß der Erfindung weist der Randabschnitt eine glatte Oberfläche auf, wobei der Randabschnitt das Licht im Nahbereich über Totalreflexion auf das Empfangselement lenkt. Gemäß dieser Ausführungsform braucht der Randabschnitt nur in einem Winkel angeordnet werden, bei dem das Licht von dem Objekt im Nahbereich an dem Randabschnitt total reflektiert wird und anschließend in das Empfangselement gelangt. Dadurch sind keine zusätzlichen Materialien oder keine zusätzlichen Herstellungsschritte der Empfangslinse notwendig. Es muss lediglich eine total reflektierende Fläche als Umlenkfläche bzw. Randabschnitt an der Empfangslinse ausgebildet sein. Damit die Umlenkfläche des Randabschnitts totalreflektierend ist, ist die Oberfläche des Randabschnittes optisch glatt ausgebildet.

In Weiterbildung der Erfindung ist der Randabschnitt durch eine ebene Fläche gebildet. Durch eine ebene Fläche als Umlenkfläche wird das Licht im Nahbereich nur dann in das Empfangselement umgelenkt, wenn das Objekt in einem Bereich vor dem Sensor, d. h. direkt vor der Empfangslinse ist. Dadurch wird ein Objekt nur genau dann detektiert, wenn es sich in einem Bereich vor dem Sensor befindet, wodurch sich ein präzises und genaues Detektionsverhalten ergibt. Der Abstand, bei welchem dieser Bereich in der Nahzone eine Wirkung hat, kann über einen Winkel der ebenen Fläche eingestellt werden.

In Weiterbildung der Erfindung ist der Randabschnitt durch eine gebogene Fläche gebildet. Gebogen bedeutet dabei, dass die Fläche nicht eben ist. Die Fläche kann dabei konkav oder konvex ausgebildet sein. Es kann sich dabei um eine teilzylindrische Fläche oder um eine sphärische Fläche handeln. Durch die Form der gebogenen Fläche kann vorteilhaft eine Bündelung oder Aufweitung der umgelenkten Strahlen erfolgen.

Durch eine konvexe Oberfläche des Randabschnittes erfolgt vorteilhaft eine Bündelung des umgelenkten Lichts. Das ist dann von Vorteil, wenn das Objekt im Nahbereich noch präziser direkt vor dem Sensor detektiert werden soll.

Durch eine konkave Oberfläche des Randabschnitts erfolgt vorteilhaft eine Aufweitung des empfangenen umgelenkten Lichts. Das ist dann von Vorteil, wenn das Objekt im Nahbereich in einem größeren Bereich entlang der optischen Achse vor dem Sensor detektiert werden soll. Auch wenn das Objekt beispielsweise entlang der optischen Achse zum Sensor verschoben ist, wird das Objekt noch detektiert. Dadurch ergibt sich ein größerer Erfassungsbereich im Nahbereich des Sensors.

In Weiterbildung der Erfindung weist der Randabschnitt eine glatte spiegelnde Oberfläche auf, wobei der Randabschnitt das Licht im Nahbereich über Reflexion auf das Empfangselement lenkt. Gemäß dieser Ausbildung können durch den Randabschnitt bzw. die Umlenkflächen die Lichtstrahlen in einem noch kleineren Winkel umgelenkt werden. Dadurch können Objekte, die sich noch näher vor der Empfangslinse befinden, detektiert werden. Die spiegelnde Oberfläche des Randabschnittes wird beispielsweise durch eine Beschichtung gebildet. Die Beschichtung kann beispielsweise aufgedampft werden. Beispielsweise ist die Beschichtung durch einen aufgedampften Metallfilm gebildet.

In einer besonderen Ausführungsform weist der Randabschnitt eine raue Oberflächenstruktur auf, wobei der Randabschnitt das Licht im Nahbereich über Streuung auf das Empfangselement lenkt. Dadurch, dass das Licht an der Oberfläche des Randabschnitts bzw. der Umlenkfläche gestreut wird, kann ein Objekt im Nahbereich auch entlang der optischen Achse versetzt sein, um detektiert zu werden. Zwar sinkt die Energiemenge des empfangenen Lichtes im Nahbereich, jedoch kann aufgrund des Streueffekts auch ein Objekt an verschiedenen Positionen im Nahbereich detektiert werden.

In Weiterbildung der Erfindung ist der Sensor ein Distanzsensor. Distanzsensoren weisen ein Sendeelement und ein Empfangselement auf. Das vom Sendeelement ausgesendete Licht wird nach Reflexion oder Remission an einem Objekt von dem Empfangselement empfangen. Dabei wird je nach verwendetem Sensorprinzip die Distanz des Objektes ermittelt. Gemäß der Erfindung können bei einem Distanzsensor im Nahbereich die Objekte besser und sicherer detektiert werden. Gemäß der Erfindung wird das Detektionsvermögen des Distanzsensors im Nahbereich verbessert.

In Weiterbildung der Erfindung weist das Empfangselement ein Nahbereichselement und ein Fernbereichselement auf, zum Empfangen von Licht in dem Nahbereich und dem Fernbereich, wobei der Randabschnitt das Licht im Nahbereich auf das Nahbereichselement des Empfangselements lenkt, wodurch ein Triangulationssensor gebildet ist. Ein Triangulationssensor ist ein besonders kostengünstiger Distanzsensor, da lediglich ein flächiges Empfangselement notwendig ist und die Auswerteeinheit einfach ausgeführt sein kann. Mit Triangulationssensoren lassen sich Objekte an bestimmten Positionen sehr einfach erfassen. Weiter eignet sich ein Triangulationssensor besonders für Entfernungsmessungen von wenigen Millimetern bis zu wenigen Metern.

In Weiterbildung der Erfindung ist der Sensor ein Sensor nach dem Lichtlaufzeitverfahren. Distanzsensoren nach dem Lichtlaufzeitverfahren weisen ein Sendeelement und ein Empfangselement auf. Das vom Sendeelement ausgesendete Licht wird nach Reflexion oder Remission an einem Objekt von dem Empfangselement empfangen. Dabei wird nach dem Sensorprinzip des Lichtlaufzeitverfahrens die Lichtlaufzeit vom Lichtsender zum Objekt und zurück zum Empfangselement erfasst und von einer Auswerteeinheit ausgewertet und daraus die Distanz des Objektes ermittelt. Sensoren nach dem Lichtlaufzeitverfahren eignen sich besonders für Entfernungen im Bereich von wenigen Dezimetern bis vielen Metern.

In Weiterbildung der Erfindung ist der Sensor ein Laserscanner. Laserscanner weisen ein Sendeelement und ein Empfangselement auf. Das vom Sendeelement ausgesendete Licht wird nach Reflexion oder Remission an einem Objekt von dem Empfangselement empfangen. Dabei wird beispielsweise nach dem Sensorprinzip des Lichtlaufzeitverfahrens die Lichtlaufzeit vom Lichtsender zum Objekt und zurück zum Empfangselement erfasst und von einer Auswerteeinheit ausgewertet und daraus die Distanz des Objektes ermittelt. Das Licht wird dabei fortlaufend, beispielsweise über einen rotierenden Spiegel in veränderndem Winkel ausgesendet, so dass ein flächiger Überwachungsbereich überwacht werden kann. Laserscanner eignen sich besonders für Entfernungen im Bereich von wenigen Dezimetern bis vielen Metern und für die Überwachung von Flächen oder Volumen.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen Sensor mit einer Empfangslinse mit einem Randabschnitt;
- Figur 2: eine Empfangslinse in einer Frontansicht;
- Figur 3: einen Sensor in einer Seitenansicht;
- Figur 4: einen Ausschnitt aus Figur 3 mit einem Empfangselement;
- Figur 5: einen Sensor in einer Seitenansicht mit am Randabschnitt umgelenkten Lichtstrahlen;
- Figur 6: einen Ausschnitt aus Figur 5 mit dem Randabschnitt der Empfangslinse;
- Figur 7: einen Ausschnitt aus Figur 5 mit einem Empfangselement;
- Figur 8: einen Sensor mit einer Empfangslinse mit einem Randabschnitt;
- Figur 9: eine Empfangslinse in einer Frontansicht mit einem konvexen Randabschnitt;
- Figur 10: eine Empfangslinse in einer Frontansicht mit einem konkaven Randabschnitt;
- Figur 11: einen Sensor mit einer Empfangslinse mit einem Randabschnitt und einer rauen Oberfläche;
- Figur 12: einen Distanzsensor;
- Figur 13: einen Triangulationssensor;
- Figur 14: einen Lichtlaufzeitsensor.

In den nachfolgenden Figuren sind identische Teile mit identischen Bezugszeichen versehen.

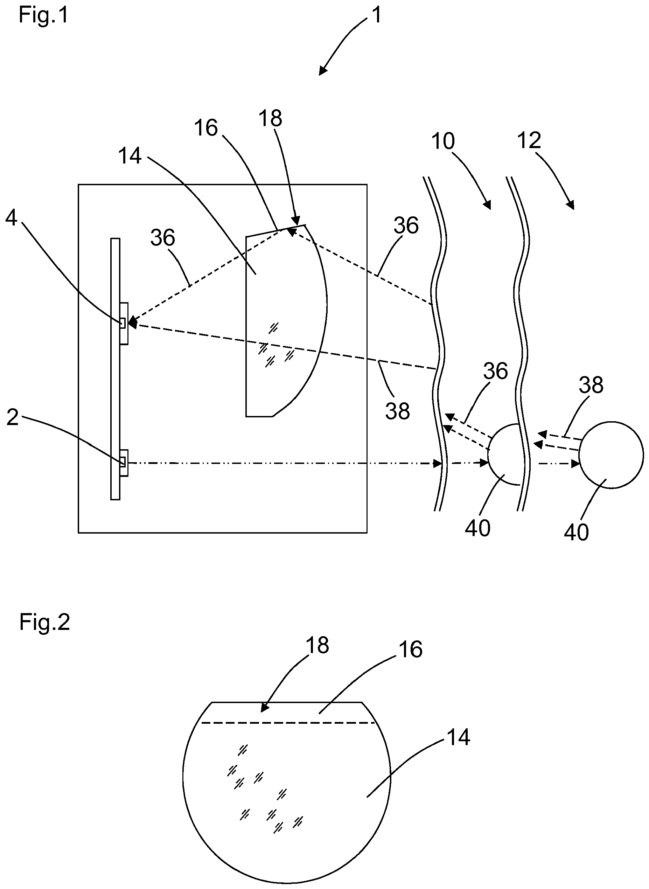

Figur 1 zeigt Sensor 1 mit einem Sendeelement 2 zum Aussenden von Licht, mit einem Empfangselement 4 zum Empfangen von Licht in einem Nahbereich 10 und einem Fernbereich 12 und einer Empfangslinse 14, welche dem Empfangselement 4 vorgeordnet ist, wobei die Empfangslinse 14 einen Randabschnitt 16 aufweist, wobei der Randabschnitt 16 das Licht aus dem Nahbereich 10 auf das Empfangselement 4 umlenkt.

Der Sensor 1 dient zur Detektion von Objekten 40 im Erfassungsbereich des Sensors 1 bzw. in einem Überwachungsbereich. Bei einer Erfassung von einem mehr oder weniger diffus streuenden Objekt 40 bzw. Target ändert sich ein Einfallswinkel in die Empfangsapertur bzw. Empfangslinse 14 bei kurzen Abständen deutlich. Nach dem Auftreffen der Lichtstrahlen auf der Empfangslinsenoberfläche treffen Lichtstrahlen von einem Objekt 40 im Nahbereich auf den Randabschnitt 16 der Empfangslinse 14. Dieser Randabschnitt 16 wird dabei nur von den Lichtstrahlen aus dem Nahbereich 36 erreicht, nicht jedoch von den Lichtstrahlen aus dem Fernbereich 38.

Der Randabschnitt 16 der Empfangslinse 14 ist so ausgeführt, dass eine Seite der Empfangslinse 14 abgeflacht ist. Über diesen Randabschnitt 16 gelangt das remittierte oder reflektierte Licht 36 von einem im Nahbereich erfassten Objekt 40 auf den Randabschnitt. Das empfangene Licht 36 wird von dem Randabschnitt 16 reflektiert oder remittiert und gelangt anschließend in das Empfangselement 4. Die vom Objekt 40 reflektierten bzw. remittierten Lichtstrahlen werden an dem Randabschnitt 16 umgelenkt und gelangen nach der Umlenkung in das Empfangselement 4. Der Randabschnitt 16 dient dem Licht 36 daher als Umlenkfläche.

Das empfangene Licht wird beispielsweise von einer nicht dargestellten Auswerteeinheit ausgewertet und es wird abhängig vom empfangenen Licht ein Objektfeststellungssignal generiert.

Gemäß Figur 1 ist der Randabschnitt 16 durch eine ebene Fläche 18 gebildet. Durch eine ebene Fläche 18 als Umlenkfläche wird das Licht im Nahbereich 10 nur dann in das Empfangselement 4 umgelenkt, wenn das Objekt 40 in einem Bereich vor dem Sensor 1, bzw. in einem Bereich vor der Empfangslinse 14 ist. Der Abstand, bei welchem dieser Bereich in der Nahzone eine Wirkung hat, kann über einen Winkel der ebenen Fläche eingestellt werden.

Figur 2 zeigt eine Frontansicht auf die Empfangslinse gemäß Figur 1.

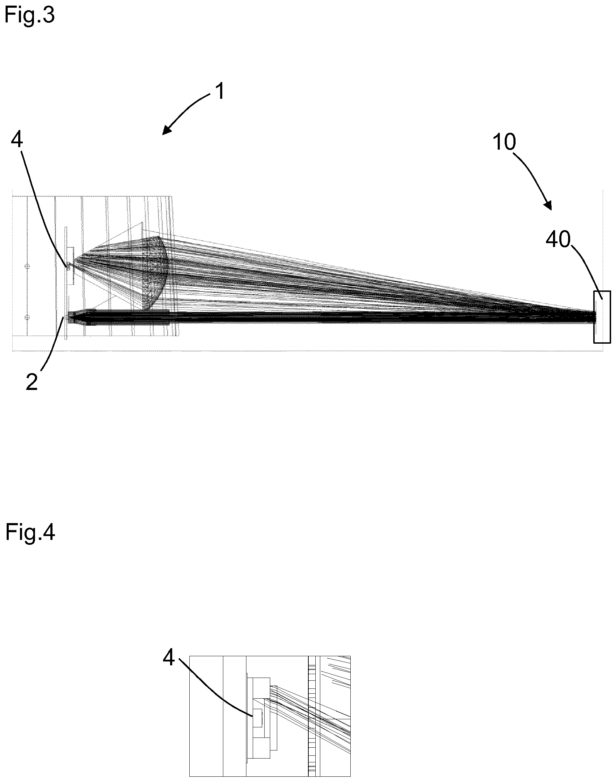

Figur 3 zeigt den Sensor 1 mit dem Sendeelement 2 und dem Empfangselement 4 in einer Seitenansicht. Dabei ist ein Objekt 40 in einem Nahbereich 10 erfasst. Es sind lediglich die Lichtstrahlen eingezeichnet, welche von der Empfangslinse 14 gebündelt werden und dann lediglich neben dem Empfangselement 4 auftreffen und nicht detektiert werden können.

Figur 4 zeigt den vergrößerten Ausschnitt des Empfangselements aus Figur 3. Die empfangenen gebündelten Lichtstrahlen aus dem Nahbereich 10 verfehlen das Empfangselement 4 knapp.

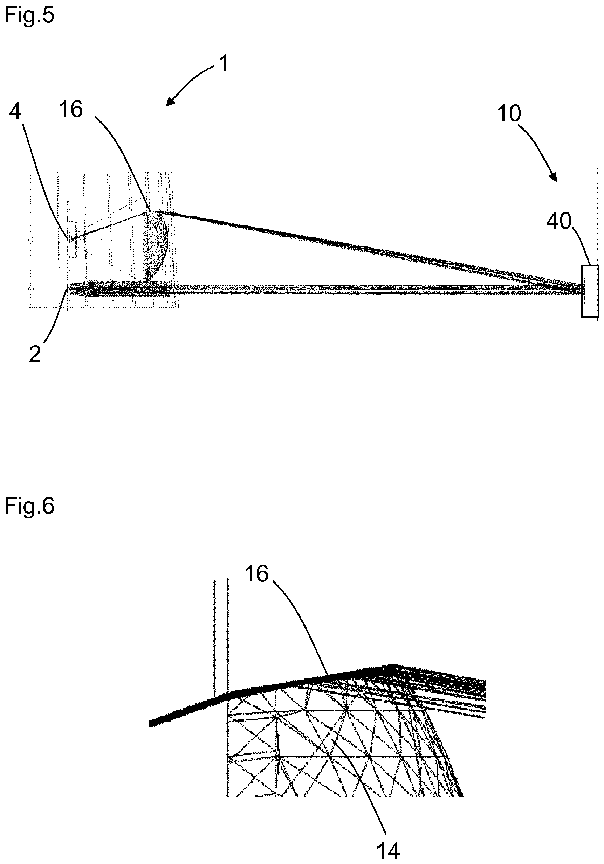

Figur 5 zeigt den Sensor 1 mit dem Sendeelement 2 und dem Empfangselement 4 in einer Seitenansicht. Dabei ist ein Objekt 40 in einem Nahbereich 10 erfasst. Es sind jetzt lediglich die Lichtstrahlen eingezeichnet, welche von dem Randabschnitt 16 umgelenkt werden und dann auf das Empfangselement 4 auftreffen und detektiert werden können.

Figur 6 zeigt den vergrößerten Ausschnitt des Randabschnitts 16 der Empfangslinse aus Figur 5. Die Lichtstrahlen aus dem Nahbereich 10 werden an dem Randabschnitt 16 umgelenkt.

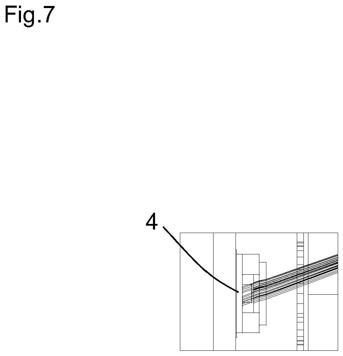

Figur 7 zeigt den vergrößerten Ausschnitt des Empfangselements 4 aus Figur 5. Die empfangenen Lichtstrahlen aus dem Nahbereich 10 werden an dem Randabschnitt 16 umgelenkt und treffen dann auf das Empfangselement 4.

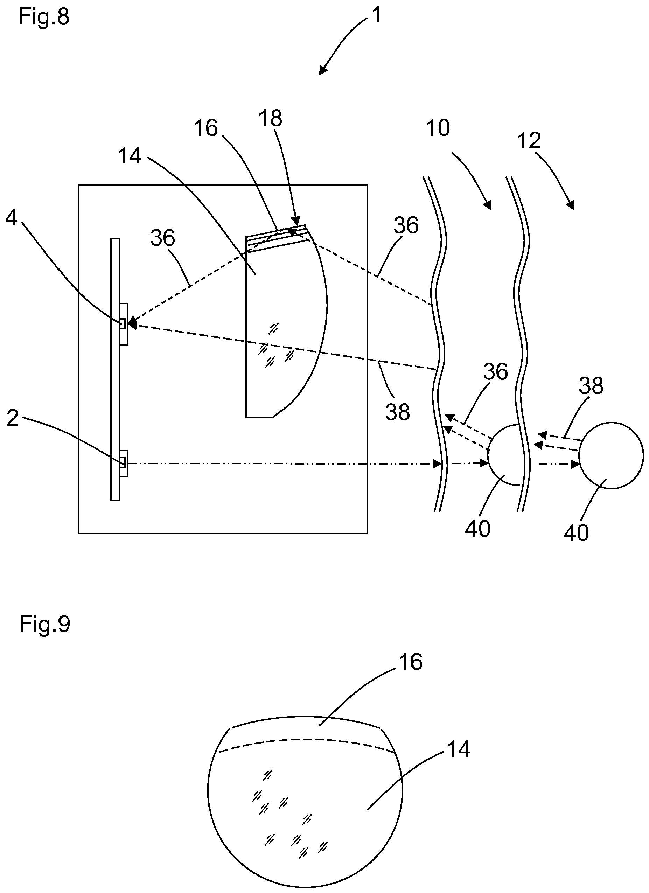

Gemäß Figur 8 ist der Randabschnitt 16 durch eine gebogene Fläche gebildet. Gebogen bedeutet dabei, dass die Fläche nicht eben ist. Die Fläche kann dabei konkav oder konvex ausgebildet sein. Es kann sich dabei um eine teilzylindrische Fläche oder um eine sphärische Fläche handeln. Durch die Form der gebogenen Fläche erfolgt eine Bündelung oder Aufweitung der umgelenkten Lichtstrahlen.

Durch eine konvexe Oberfläche des Randabschnittes 16 erfolgt eine Bündelung des umgelenkten Lichts. Durch eine konkave Oberfläche des Randabschnitts 16 erfolgt eine Aufweitung des empfangenen umgelenkten Lichts.

Figur 9 zeigt eine Frontansicht auf die Empfangslinse 14 gemäß Figur 8 mit einer konvexen Oberfläche des Randabschnitts 16.

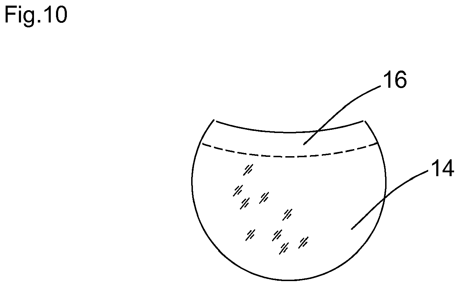

Figur 10 zeigt eine Frontansicht auf eine Empfangslinse 14 mit einer konkaven Oberfläche des Randabschnitts 16.

Gemäß den Figuren 1 bis 10 weist der Randabschnitt 16 eine glatte Oberfläche auf, wobei der Randabschnitt 16 das Licht im Nahbereich 10 über Totalreflexion auf das Empfangselement 4 lenkt. Gemäß dieser Ausführungsform braucht der Randabschnitt 16 nur in einem Winkel angeordnet werden, bei dem das Licht von dem Objekt 40 im Nahbereich 10 an dem Randabschnitt 16 total reflektiert wird und anschließend in das Empfangselement 4 gelangt. Es muss lediglich eine total reflektierende Fläche als Umlenkfläche bzw. Randabschnitt 16 an der Empfangslinse 14 ausgebildet sein. Damit die Umlenkfläche des Randabschnitts 16 totalreflektierend ist, ist die Oberfläche des Randabschnittes 16 optisch glatt ausgebildet.

Gemäß Figuren 1 bis 10 kann der Randabschnitt 16 alternativ eine glatte spiegelnde Oberfläche aufweisen, wobei der Randabschnitt 16 das Licht im Nahbereich 10 über Reflexion auf das Empfangselement 4 lenkt. Die spiegelnde Oberfläche des Randabschnittes 16 wird beispielsweise durch eine Beschichtung gebildet. Die Beschichtung kann beispielsweise aufgedampft werden. Beispielsweise ist die Beschichtung durch einen aufgedampften Metallfilm gebildet.

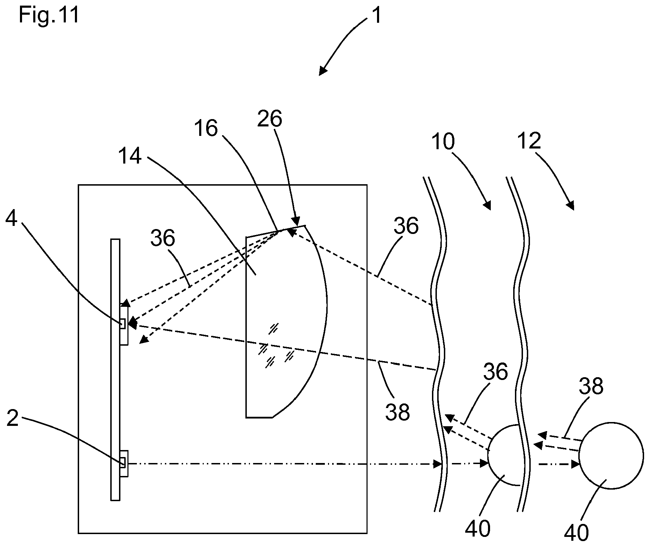

Gemäß Figur 11 weist der Randabschnitt 16 eine raue Oberflächenstruktur 26 auf, wobei der Randabschnitt 16 das Licht im Nahbereich 10 über Streuung auf das Empfangselement 4 lenkt. Zwar sinkt die Energiemenge des empfangenen Lichtes aus dem Nahbereich 10, jedoch kann aufgrund des Streueffekts auch ein Objekt 40 an verschiedenen Positionen im Nahbereich 10 detektiert werden.

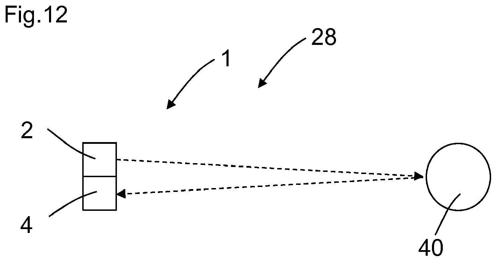

Gemäß Figur 12 ist der Sensor ein Distanzsensor 28. Distanzsensoren 28 weisen ein Sendeelement 2 und ein Empfangselement 4 auf. Das vom Sendeelement 2 ausgesendete Licht wird nach Reflexion oder Remission an einem Objekt 40 von dem Empfangselement 4 empfangen. Dabei wird je nach verwendetem Sensorprinzip die Distanz des Objektes 40 ermittelt.

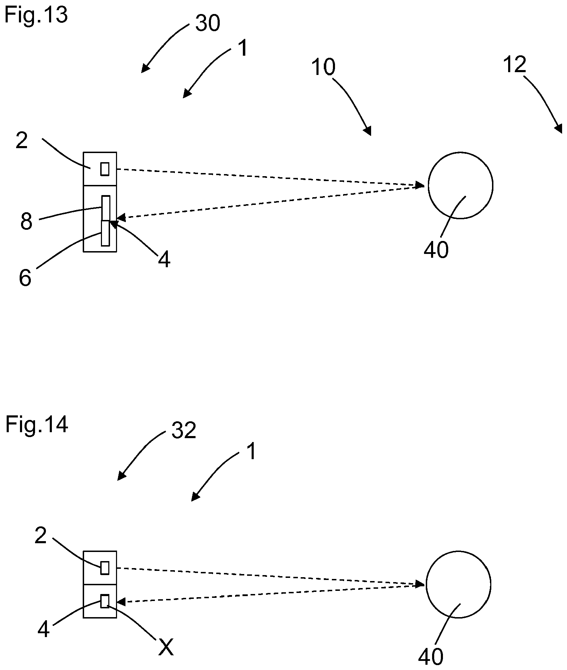

Gemäß Figur 13 weist das Empfangselement 4 ein Nahbereichselement 6 und ein Fernbereichselement 8 auf, zum Empfangen von Licht in dem Nahbereich 10 und dem Fernbereich 12, wobei der Randabschnitt das Licht im Nahbereich 10 auf das Nahbereichselement 6 des Empfangselements 4 lenkt, wodurch ein Triangulationssensor gebildet ist. Ein Triangulationssensor 30 weist ein ortsauflösendes flächiges Empfangselement 4 auf.

Gemäß Figur 14 ist der Sensor 1 ein Sensor nach dem Lichtlaufzeitverfahren 32. Distanzsensoren nach dem Lichtlaufzeitverfahren weisen ein Sendeelement 2 und ein Empfangselement 4 auf. Das vom Sendeelement 2 ausgesendete Licht wird nach Reflexion oder Remission an einem Objekt 40 von dem Empfangselement 4 empfangen. Dabei wird nach dem Sensorprinzip des Lichtlaufzeitverfahrens die Lichtlaufzeit vom Lichtsender 2 zum Objekt 40 und zurück zum Empfangselement 4 erfasst und von einer Auswerteeinheit ausgewertet und daraus die Distanz des Objektes 40 ermittelt.

Gemäß einem nicht dargestellten Ausführungsbeispiel ist der Sensor ein Laserscanner. Laserscanner weisen ein Sendeelement und ein Empfangselement auf. Das vom Sendeelement ausgesendete Licht wird nach Reflexion oder Remission an einem Objekt von dem Empfangselement empfangen. Dabei wird beispielsweise nach dem Sensorprinzip des Lichtlaufzeitverfahrens die Lichtlaufzeit vom Lichtsender zum Objekt und zurück zum Empfangselement erfasst und von einer Auswerteeinheit ausgewertet und daraus die Distanz des Objektes ermittelt. Das Licht wird dabei fortlaufend, beispielsweise über einen rotierenden Spiegel in veränderndem Winkel ausgesendet, so dass ein flächiger Überwachungsbereich überwacht werden kann.

### Bezugszeichen:

1 Sensor
2 Sendeelement
4 Empfangselement
6 Nahbereichselement
8 Fernbereichselement
10 Nahbereich
12 Fernbereich
14 Empfangslinse
16 Randabschnitt
18 ebene Fläche
20 gebogene Fläche
22 glatte Oberfläche
24 spiegelnde Oberfläche
26 raue Oberflächenstruktur
28 Distanzsensor
30 Triangulationssensor
32 Lichtlaufzeitsensor
34 Laserscanner
36 Lichtstrahlen aus dem Nahbereich
38 Lichtstrahlen aus dem Fernbereich
40 Objekt

## Patentansprüche

1. Sensor mit einem Sendeelement (2) zum Aussenden von Licht, mit einem Empfangselement (4) zum Empfangen von Licht in einem Nahbereich (10) und einem Fernbereich (12) und einer Empfangslinse (14), welche dem Empfangselement (4) vorgeordnet ist,
**dadurch gekennzeichnet, dass**
die Empfangslinse (14) einen Randabschnitt (16) aufweist, wobei der Randabschnitt (16) das Licht aus dem Nahbereich (10) auf das Empfangselement (4) umlenkt, wobei der Randabschnitt (16) eine glatte Oberfläche (22) aufweist, wobei der Randabschnitt (16) das Licht im Nahbereich (10) über Totalreflexion auf das Empfangselement (4) lenkt, wobei der Randabschnitt (16) so ausgeführt ist, dass eine Seite der Empfangslinse (14) abgeflacht ist, wobei die Lichtstrahlen von einem Objekt (40) im Nahbereich (10) nach dem Auftreffen der Lichtstrahlen auf der konvexen Empfangslinsenoberfläche auf den Randabschnitt (16) der Empfangslinse treffen.

2. Sensor nach Anspruch 1, **dadurch gekennzeichnet, dass** der Randabschnitt (16) durch eine ebene Fläche (18) gebildet ist.

3. Sensor nach einem der vorhergehenden Ansprüche, **dadurch gekennzeichnet, dass** der Randabschnitt (16) durch eine gebogene Fläche (20) gebildet ist.

4. Sensor nach einem der vorhergehenden Ansprüche, **dadurch gekennzeichnet, dass** der Randabschnitt (16) eine glatte spiegelnde Oberfläche (24) aufweist, wobei der Randabschnitt (16) das Licht im Nahbereich (10) über Reflexion auf das Empfangselement (4) lenkt.

5. Sensor nach einem der vorhergehenden Ansprüche 1 bis 3, **dadurch gekennzeichnet, dass** der Randabschnitt (16) eine raue Oberflächenstruktur (26) aufweist, wobei der Randabschnitt (16) das Licht im Nahbereich (10) über Streuung auf das Empfangselement (4) lenkt.

6. Sensor nach einem der vorhergehenden Ansprüche, **dadurch gekennzeichnet, dass** der Sensor (1) ein Distanzsensor (28) ist.

7. Sensor nach einem der vorhergehenden Ansprüche, **dadurch gekennzeichnet, dass** das Empfangselement (4) ein Nahbereichselement (6) und ein Fernbereichselement (8) aufweist, zum Empfangen von Licht in dem Nahbereich (10) und dem Fernbereich (12), wobei der Randabschnitt (16) das Licht im Nahbereich (10) auf das Nahbereichselement (6) des Empfangselements (4) lenkt, wodurch ein Triangulationssensor (30) gebildet ist.

8. Sensor nach einem der vorhergehenden Ansprüche, **dadurch gekennzeichnet, dass** der Sensor (1) ein Sensor nach dem Lichtlaufzeitverfahren (32) ist.

9. Sensor nach einem der vorhergehenden Ansprüche, **dadurch gekennzeichnet, dass** der Sensor ein Laserscanner (34) ist.

## Claims

1. A sensor having a transmission element (2) for transmitting light, having a reception element (4) for receiving light in a near zone (10) and in a far zone (12), and having a receiving lens (14) that is disposed in front of the reception element (4),
**characterized in that**
the receiving lens (14) has a marginal section (16), with the marginal section (16) deflecting the light from the near zone (10) onto the reception element (4), with the marginal section having a smooth surface (22), with the marginal section (16) directing the light in the near zone (10) via total reflection onto the reception element (4), with the marginal section (16) being designed such that a side of the receiving lens (14) is flattened, and with the light beams from an object (40) in the near zone (10) being incident on the marginal section (16) of the receiving lens after the incidence of the light beams on the convex receiving lens surface.

2. A sensor in accordance with claim 1, **characterized in that** the marginal section (16) is formed by a planar surface (18).

3. A sensor in accordance with one of the preceding claims, **characterized in that** the marginal section (16) is formed by a curved surface (20).

4. A sensor in accordance with any one of the preceding claims, **characterized in that** the marginal section (16) has a smooth, reflective surface (24), with the marginal section (16) directing the light in the near zone (10) via reflection onto the reception element (4).

5. A sensor in accordance with any one of the preceding claims 1 to 3,
**characterized in that** the marginal section (16) has a rough surface structure (26), with the marginal section (16) directing the light in the near zone (10) via scattering onto the reception element (4).

6. A sensor in accordance with any one of the preceding claims, **characterized in that** the sensor (1) is a distance sensor (28).

7. A sensor in accordance with any one of the preceding claims, **characterized in that** the reception element (4) has a near zone element (6) and a far zone element (8) for receiving light in the near zone (10) and in the far zone (12), with the marginal section (16) directing the light in the near zone (10) onto the near zone element (6) of the reception element (4), whereby a triangulation sensor (30) is formed.

8. A sensor in accordance with any one of the preceding claims, **characterized in that** the sensor (1) is a sensor using the time-of-flight method (32).

9. A sensor in accordance with any one of the preceding claims, **characterized in that** the sensor is a laser scanner (34).

## Revendications

1. Capteur comportant un élément émetteur (2) pour émettre de la lumière, un élément récepteur (4) pour recevoir de la lumière dans une zone proche (10) et dans une zone lointaine (12), et une lentille de réception (14) qui est agencée en amont de l'élément récepteur (4),
**caractérisé en ce que**
la lentille de réception (14) comprend une portion de bord (15), et la portion de bord (16) renvoie la lumière de la zone proche (10) vers l'élément récepteur (4), la portion de bord (16) présente une surface lisse (22), la portion de bord (16) renvoie la lumière dans la zone proche (10) par réflexion totale vers l'élément récepteur (4), la portion de bord (16) est réalisée de telle sorte qu'une face de la lentille de réception (14) est aplatie, et une fois que les rayons lumineux sont tombés sur la surface convexe de la lentille de réception, les rayons lumineux tombent depuis un objet (40) dans la zone proche (10) sur la portion de bord (16) de la lentille de réception.

2. Capteur selon la revendication 1, **caractérisé en ce que** la portion de bord (16) est formée par une surface plane (18).

3. Capteur selon l'une des revendications précédentes, **caractérisé en ce que** la portion de bord (16) est formée par une surface incurvée (20).

4. Capteur selon l'une des revendications précédentes, **caractérisé en ce que** la portion de bord (16) présente une surface lisse réfléchissante (24), et la portion de bord (16) renvoie la lumière dans la zone proche (10) par réflexion vers l'élément récepteur (4).

5. Capteur selon l'une des revendications précédentes 1 à 3, **caractérisé en ce que** la portion de bord (16) présente une structure surfacique rugueuse (26), et la portion de bord (16) renvoie la lumière dans la zone proche (10) par diffusion vers l'élément récepteur (4).

6. Capteur selon l'une des revendications précédentes, **caractérisé en ce que** le capteur (1) est un capteur de distance (28).

7. Capteur selon l'une des revendications précédentes, **caractérisé en ce que** l'élément récepteur (4) comprend un élément de zone proche (6) et un élément de zone lointaine (8) pour recevoir la lumière dans la zone proche (10) et dans la zone lointaine (12), et la portion de bord (16) renvoie la lumière dans la zone proche (10) vers l'élément de zone proche (6) de l'élément récepteur (4), dont résulte un capteur de triangulation (30).

8. Capteur selon l'une des revendications précédentes, **caractérisé en ce que** le capteur (1) est un capteur selon le principe du temps de parcours de lumière (32).

9. Capteur selon l'une des revendications précédentes, **caractérisé en ce que** le capteur est un scanneur laser (34).
